(19) Europäisches Patentamt / European Patent Office / Office européen des brevets

(11) **EP 4 150 327 B1**

(12) **EUROPEAN PATENT SPECIFICATION**

(45) Date of publication and mention of the grant of the patent:
**10.01.2024 Bulletin 2024/02**

(21) Application number: **21725111.5**

(22) Date of filing: **09.05.2021**

(51) International Patent Classification (IPC):
*G01N 21/78* *(2006.01)* *G01N 21/84* *(2006.01)*
*G01N 21/25* *(2006.01)* *G01N 21/29* *(2006.01)*
*G01J 3/50* *(2006.01)* *G01J 3/52* *(2006.01)*
*G01J 3/28* *(2006.01)*

(52) Cooperative Patent Classification (CPC):
**G01N 21/25; G01J 3/50; G01J 3/52; G01N 21/78;
G01N 21/8483;** G01J 2003/2813; G01N 21/293

(86) International application number:
**PCT/EP2021/062244**

(87) International publication number:
**WO 2021/228730 (18.11.2021 Gazette 2021/46)**

(54) **METHOD OF EVALUATING THE QUALITY OF A COLOR REFERENCE CARD**

VERFAHREN ZUR BEURTEILUNG DER QUALITÄT EINER FARBREFERENZKARTE

PROCÉDÉ D'ÉVALUATION DE LA QUALITÉ D'UNE CARTE DE RÉFÉRENCE DE COULEURS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**MA TN**

(30) Priority: **11.05.2020 EP 20173917**

(43) Date of publication of application:
**22.03.2023 Bulletin 2023/12**

(73) Proprietors:
• **F. Hoffmann-La Roche AG**
 **4070 Basel (CH)**
 Designated Contracting States:
 **AL CH CY CZ ES GB GR HR HU IE IS LI MC MK
 NO PL RO RS SK SM TR**
• **Roche Diabetes Care GmbH**
 **68305 Mannheim (DE)**
 Designated Contracting States:
 **AT BE BG DE DK EE FI FR IT LT LU LV MT NL PT
 SE SI**

(72) Inventors:
• **BERG, Max**
 **68305 Mannheim (DE)**
• **HAILER, Fredrik**
 **68305 Mannheim (DE)**
• **LIMBURG, Bernd**
 **68305 Mannheim (DE)**
• **TUERCK, Volker**
 **10965 Berlin (DE)**
• **WINKELNKEMPER, Momme**
 **10965 Berlin (DE)**

(74) Representative: **Riwotzki, Karsten**
 **Roche Diabetes Care GmbH**
 **Patentabteilung**
 **Sandhofer Straße 116**
 **68305 Mannheim (DE)**

(56) References cited:
**WO-A1-2019/162496** **US-A1- 2012 189 509**
**US-A1- 2019 137 405**

**Description**

Technical Field

The present invention refers to a method of evaluating the quality of a color reference card and a method for determining the concentration of an analyte in a bodily fluid. The invention further relates to a mobile device having a camera, to a kit comprising said mobile device and a color reference card, to a computer program and a computer-readable storage medium. The methods and devices as well as the computer program and the computer-readable storage medium specifically may be used in medical diagnostics, in order to for example quantitatively and/or qualitatively detect one or more analytes in one or more body fluids, such as for detecting blood glucose in blood and/or interstitial fluid. Other fields of application of the present invention, however, are feasible.

Background art

In the field of medical diagnostics, in many cases, one or more analytes have to be detected in samples of a body fluid, such as blood, interstitial fluid, urine, saliva or other types of body fluids. Examples of analytes to be detected are glucose, triglycerides, lactate, cholesterol or other types of analytes typically present in these body fluids. According to the concentration and/or the presence of the analyte, an appropriate treatment may be chosen, if necessary. Without narrowing the scope, the invention specifically may be described with respect to blood glucose measurements. It shall be noted, however, that the present invention may also be used for other types of analytical measurements using test elements.

Generally, devices and methods known to the skilled person make use of test elements comprising one or more test chemicals, which, in presence of the analyte to be detected, are capable of performing one or more detectable detection reactions, such as optically detectable detection reactions. With regard to the test chemicals comprised in test elements, reference may be made e.g. to J. Hoenes et al.: The Technology Behind Glucose Meters: Test Strips, Diabetes Technology & Therapeutics, Volume 10, Supplement 1, 2008, S-10 to S-26. Other types of test chemistry are possible and may be used for performing the present invention.

In analytical measurements, specifically analytical measurements based on color formation reactions, one technical challenge resides in the evaluation of the color change which is due to the detection reaction. Besides using dedicated analytical devices, such as handheld blood glucose meters, the use of generally available electronics such as smart phones and portable computers or other mobile devices has become more and more popular over the recent years. Thus, a camera comprised by these mobile devices may be used to measure the color change of the detection reaction. Generally, products on the market make use of color reference for photometric measurements, for example to compensate for different lighting conditions during the measurement. One or more images of a color reference having color reference fields with known reference color values may be captured by using the camera of the mobile device. A transformation algorithm may be determined by relating the measured reference color values to the known reference color values.

For example, US 2019/0137405 A1 describes a system in the field of monitoring air quality, and more specifically, the field of identification of the presence of gaseous chemical pollutants such as volatile organic compounds, in an enclosed environment. The system includes: a substrate; a gaseous chemical pollutant sensor; and at least one colorimetric marker of a predetermined colour situated on the substrate.

US 2012/0189509 A1 discloses an automatic analyzing method for test strips including steps of: providing a test strip unit at least having a reacting region and an image calibration region; capturing an image of the test strip unit; analyzing the image so as to obtain a first image signal of an image calibration region and a second image signal of a reacting region; comparing the first image signal with a standard signal so as to obtain image signal calibration parameters; calibrating the second image signal by applying the image signal calibration parameters so as to obtain a third image signal; and comparing the third image signal with data in a database so as to obtain a corresponding parameter values. Therein, an automatic analyzing method for test strips is also provided.

WO 2019/162496 A1 describes methods, computer programs and systems for calibrating and using a camera for detecting an analyte in a sample. The calibration method for calibrating a camera for detecting an analyte in a sample comprises: a. providing a set of color coordinate systems, the set of color coordinate systems comprising a plurality of different color coordinate systems configured for describing a color of an object; b. providing a set of test samples having known concentrations of the analyte; c. applying the test samples to a set of test elements, each test element having at least one test field comprising at least one test chemical configured for performing an optically detectable detection reaction with the analyte, thereby creating at least one colored test field for each of the test samples; d. acquiring images of the colored test fields by using the camera; e. generating color coordinates for the images of the colored test fields, by using the color coordinate systems of the set of color coordinate systems, thereby creating a set of color coordinates for the test samples and for the color coordinate systems; f. providing a set of coding functions, the set of coding functions comprising a plurality of coding functions for transforming color coordinates of a test field into a corresponding concentration of the analyte in the sample; g. transforming the set of color coordinates generated in step e. into a set of measured concentrations by using the set of coding functions; and h. comparing the set of measured concentrations with the known concentrations of the test samples of the set of test samples and determining a best match color coordinate system of the set of color coordinate systems and a best match coding function of the set of coding functions for which the set of measured concentrations best matches with the known concentrations.

Despite the advantages achieved by the known methods and devices, several technical challenges remain. Specifically, the color reference may have to be replaced on a regular basis to avoid negative influences on the performance of the analytical measurement, such as due to a fatigue of the color reference. As a precaution, the color reference may be replaced in short time intervals independently from the actual degradation of the color reference. Further, the reliability of the color reference and the derived color correction may not be verified prior to or during application. For example, a damaged color reference, such as a color reference damaged by scratches or other mechanical influence, may result in a defective color correction of the captured image. Thus, the defective color correction may lead to an inaccurate analytical measurement when determining the analyte concentration based on a color formation reaction.

Problem to be solved

It is therefore desirable to provide devices and methods which at least partially address the above-mentioned challenges. Specifically, it is desirable to provide devices and methods which allow for a user-friendly mobile-based determination of a concentration of at least one analyte in a bodily fluid while assuring a high accuracy and reliability of the analytical measurement.

Summary

This problem is addressed by a method of evaluating the quality of a color reference card and by a method for determining the concentration of an analyte in a bodily fluid. Further, by a mobile device having a camera, by a kit comprising said mobile device and a color reference card, by a computer program and by a computer-readable storage medium, with the features of the independent claims. Advantageous embodiments which might be realized in an isolated fashion or in any arbitrary combinations are listed in the dependent claims.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once. Further, it shall be noted that the term "at least some" as used herein is a broad term and is to be given its ordinary and customary meaning to a person of ordinary skill in the art and is not to be limited to a special or customized meaning. The term specifically may refer, without limitation, to "one or more" items introduced by this term, specifically to two or more of said items.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

The invention comprises a method according to claim 1 of evaluating the quality of a color reference card, the color reference card comprising a plurality of color reference fields having known reference color values. The method comprises the following steps which, as an example, may be performed in the given order. It shall be noted, however, that a different order may generally also be possible. Further, it may also be possible to perform one or more of the method steps once or repeatedly. Further, it may be possible to perform two or more of the method steps simultaneously or in a timely overlapping fashion. The method may comprise further method steps which are not listed.

The term "evaluating the quality of a color reference card" as used herein is a broad term and is to be given its ordinary and customary meaning to a person of ordinary skill in the art and is not to be limited to a special or customized meaning. The term specifically may refer, without limitation, to a process of quantitatively and/or qualitatively assessing the quality of a color reference card, in its entirety or partially, such as by determining at least one item of quality information qualifying the quality of the color reference card and/or quantifying the quality of the color reference card or a part thereof, such as of at least one color reference field or of one or more color reference fields out of a plurality of color reference fields of the color reference card. The item of quality information, as an example, may be or may comprise a binary value, indicating a sufficient quality or an insufficient quality. Additionally or alternatively, the item of quality information may be or may comprise at least one numerical value characterizing a degree of quality of the color reference card, such as on a predetermined quality scale. As used herein, the term "quality of a color reference card" specifically may refer to a state of the color reference card indicating whether or not the color reference card may be used for a method for determining the concentration of an analyte in a bodily fluid and/or the degree of suitability or the degree of reliability of the color reference card for being used for the method for determining the concentration of the analyte in the bodily fluid. The latter, as outlined above, may, as an example, indicate a degree of confidence or another numerical value indicating the degree of suitability or the degree of reliability of the color reference card for being used for the method for determining the concentration of the analyte in the bodily fluid. Possible details of the method for determining the concentration of the analyte in the bodily fluid will be explained below. The result of the evaluation of the quality of a color reference card may be or may comprise, as outlined above, at least one item of quality information on the quality of the color reference card. Thus, the state of the color reference card may be derived using the at least one item of quality information on the color reference card. Further, the result of the evaluation of the quality of the reference card may also comprise a plurality of items of quality information on the quality of the color reference fields comprised by the color reference card. Thus, the evaluation may also result in an admission of color reference fields having a high quality and/or an exclusion of color reference fields having a low quality for determining the relationship in step iii.

The term "color reference card" as used herein is a broad term and is to be given its ordinary and customary meaning to a person of ordinary skill in the art and is not to be limited to a special or customized meaning. The term specifically may refer, without limitation, to an arbitrary item having, disposed therein or disposed thereon, such as on at least one surface, at least one color reference field having known color properties or optical properties, such as having one or more colored fields having known color coordinates. As an example, the color reference card may be a flat card comprising at least one substrate having, on at least one surface and/or disposed therein, at least one color reference field having known color coordinates. The substrate, specifically, may have a flat surface with the color reference fields disposed thereon. The substrate, as an example, may be or may comprise one or more of a paper substrate, a cardboard substrate, a plastic substrate, a ceramic substrate or a metal substrate. Laminate substrates are also possible. The substrate, as an example, may be sheet-like or flexible. It shall be noted, however, that the substrate may also be implemented into an article of use, such as into a wall of a box, a vial, a container, a medical consumable, such as a test strip, or the like. Thus, the color reference card may also fully or partially be integrated into an optical test strip, as will be outlined in further detail below. Thus, the at least one image of at least a part of the color reference card may fully or partially comprise an image of at least one part of the optical test strip having at least one reagent test region.

Further, the color reference card may comprise at least one marker. The at least one marker, as an example, may be or may comprise at least one of: an identifier for identifying the color reference card and/or the type of the color reference card, such as at least one of a label, a barcode or a QR-code; a specifier specifying details of the color reference card, such as reference color values or the like, such as by using at least one of a label, a barcode or a QR-code; a position marker and/or orientation marker, such as at least one of a fiducial mark, an ArUco code or the like. Specifically, the at least one marker may be arranged in at least one corner of the color reference card. Thus, the mobile device may be configured for detecting and/or reading the marker, specifically by optically detecting the marker on the at least one image captured in step i., and optionally retrieving information from the marker, such as information on the type, the properties or the orientation of the color reference card.

The term "color reference field" as used herein is a broad term and is to be given its ordinary and customary meaning to a person of ordinary skill in the art and is not to be limited to a special or customized meaning. The term specifically may refer, without limitation, to an arbitrary item having known optical properties, such as a known reference color value. Specifically, a color reference field comprised by the color reference card may be a 2-dimensional structure, such as a rectangle, a square, a polygon, a circle and/or an ellipse, with a uniform color value. The color value of the color reference field specifically may be one or more of predetermined, known or determinable. The color reference field may be comprised by a surface of the color reference card and/or disposed therein, specifically in such a way that the at least one color reference field may be visible in the image captured in step i.. Further, the color reference fields may have color values in a subspace of the color coordinate system corresponding to the color space of the color formation reaction of the reagent test region. The color reference fields of the color reference card specifically may be arranged in a regular pattern on the surface of the color reference card, such as in a rectangular pattern, e.g. a rectangular matrix pattern. The pattern arrangement specifically may enable identifying the color reference fields, such as by searching at a predetermined distance in an x- and/or y-direction from one or more of the markers.

The term "color value" as used herein is a broad term and is to be given its ordinary and customary meaning to a person of ordinary skill in the art and is not to be limited to a special or customized meaning. The term specifically may refer, without limitation, to a numerical indication of a color of a pixel, an object or the like. Specifically, the color value may be or may comprise at least one color coordinate in a color coordinate system. The term "color coordinate system" as used herein is a broad term and is to be given its ordinary and customary meaning to a person of ordinary skill in the art and is not to be limited to a special or customized meaning. The term specifically may refer, without limitation, to an arbitrary coordinate system by which a color of an object, such as a color of a test field or a color of an image recorded by a camera, may be characterized, such as mathematically or physically. Various color coordinate systems are generally known to the skilled person, such as color coordinate systems defined by CIE. The color coordinates, in their entirety, may span or define a color space, such as by defining three or four basis vectors. For example, the color coordinates may comprise R, G, B color coordinates. Thus, the color value may be a color triple having R, G, B color coordinates. Color coordinates in other color coordinate systems, such as color coordinate system defined by CIE, are also feasible.

The term "known reference color value" as used herein is a broad term and is to be given its ordinary and customary meaning to a person of ordinary skill in the art and is not to be limited to a special or customized meaning. The term specifically may refer, without limitation, to a predetermined, real or true color value of a color reference field. Specifically, the known reference color value may comprise at least three color coordinates, such as at least one color coordinate for each R, G, B color. The known reference color value for each color reference field may be stored on a data storage device of the mobile device, for example by a look-up table, a register, a database or the like. The known reference color values may have been determined by measuring the respective color values, specifically by measuring the color values in a controlled laboratory environment, such as by using a photospectrometer. The measurement of the color reference fields using a photospectrometer may define the respective known reference color values.

Further, the known reference color values of one or more second color reference fields may also be determined from the known reference color value of a first color reference field. Specifically, a predetermined and/or known relationship may relate the known reference color value of the first color referenced field to the known reference color value of the second reference field. Thus, the color reference card may comprise color reference fields having known reference color values, wherein the known reference color values may be related to each other. For example, the second color reference field may have a known reference color value comprising at least one color coordinate, such as one of the R, G, B color coordinates, which is 10 percent higher than at least one color coordinate comprised by the known reference color value of the first color reference field. Further, a third color reference field may have a known reference color value comprising at least one color coordinate, such as one of the R, G, B color coordinates, which is 20 percent higher than at least one color coordinate comprised by the known reference color value of the first color reference field. Thus, the known reference color value of the first color reference field may be known and may further be used for determining the known reference color values of one or more second color reference fields.

As outlined above, step i. comprises capturing the at least one image of at least a part of the color reference card by using the camera of the mobile device. The term "mobile device" as used herein is a broad term and is to be given its ordinary and customary meaning to a person of ordinary skill in the art and is not to be limited to a special or customized meaning. The term specifically may refer, without limitation, to a mobile electronics device, more specifically to a mobile communication device such as a cell phone or smartphone. Additionally or alternatively, as will be outlined in further detail below, the mobile device may also refer to a tablet computer or another type of portable computer having at least one camera.

The term "camera" as used herein is a broad term and is to be given its ordinary and customary meaning to a person of ordinary skill in the art and is not to be limited to a special or customized meaning. The term specifically may refer, without limitation, to a device having at least one imaging element configured for recording or capturing spatially resolved one-dimensional, two-dimensional or even three-dimensional optical data or information. As an example, the camera may comprise at least one camera chip, such as at least one CCD chip and/or at least one CMOS chip configured for recording images. As used herein, without limitation, the term "image" specifically may relate to data recorded by using a camera, such as a plurality of electronic readings from the imaging device, such as the pixels of the camera chip.

The camera, besides the at least one camera chip or imaging chip, may comprise further elements, such as one or more optical elements, e.g. one or more lenses. As an example, the camera may be a fix-focus camera, having at least one lens which is fixedly adjusted with respect to the camera. Alternatively, however, the camera may also comprise one or more variable lenses which may be adjusted, automatically or manually. The invention specifically shall be applicable to cameras as usually used in mobile applications such as notebook computers, tablets or, specifically, cell phones such as smartphones. Thus, specifically, the camera may be part of a mobile device which, besides the at least one camera, comprises one or more data processing devices such as one or more data processors. Other cameras, however, are feasible.

The camera specifically may be a color camera. Thus, such as for each pixel, color information may be provided or generated, such as color values for three colors R, G, B. A larger number of color values is also feasible, such as four color values for each pixel, for example R, G, G, B. Color cameras are generally known to the skilled person. Thus, as an example, the camera chip may consist of a plurality of three or more different color sensors each, such as color recording pixels like one pixel for red (R), one pixel for green (G) and one pixel for blue (B). For each of the pixels, such as for R, G, B, values may be recorded by the pixels, such as digital values in the range of 0 to 255, depending on the intensity of the respective color. Instead of using color triples such as R, G, B, as an example, quadruples may be used, such as R, G, G, B. The color sensitivities of the pixels may be generated by color filters or by appropriate intrinsic sensitivities of the sensor elements used in the camera pixels. These techniques are generally known to the skilled person.

The term "capturing at least one image" as used herein is a broad term and is to be given its ordinary and customary meaning to a person of ordinary skill in the art and is not to be limited to a special or customized meaning. The term specifically may refer, without limitation, to one or more of imaging, image recording, image acquisition, image capturing. The term "capturing at least one image" may comprise capturing a single image and/or a plurality of images such as a sequence of images. For example, the capturing of the image may comprise recording continuously a sequence of images such as a video or a movie. The capturing of the at least one image may be initiated by the user action or may automatically be initiated, e.g. once the presence of the at least one object within a field of view and/or within a predetermined sector of the field of view of the camera is automatically detected. These automatic image acquisition techniques are known e.g. in the field of automatic barcode readers, such as from automatic barcode reading apps. The capturing of the images may take place, as an example, by acquiring a stream or "live stream" of images with the camera, wherein one or more of the images, automatically or by user interaction such as pushing a button, are stored and used as the at least one first image or the at least one second image, respectively. The image acquisition may be supported by a processor of the mobile device, and the storing of the images may take place in a data storage device of the mobile device.

As outlined above, step ii. comprises determining measured reference color values for at least some of the color reference fields from the image. The term "measured reference color value" as used herein is a broad term and is to be given its ordinary and customary meaning to a person of ordinary skill in the art and is not to be limited to a special or customized meaning. The term specifically may refer, without limitation, to a color value determined by measurement, specifically, by using the camera of the mobile device, more specifically from the image captured in step i.. Thus, the measured color value may be or may comprise at least one color value of at least one color reference field measured by using the camera of the mobile device and optionally at least one processor of the mobile device for evaluating the image. For example, the color reference field disposed on the color reference card may be identified on the image captured in step i., such as by one or more of a computer vision process and/or an image analysis, and the color value of the color reference field may be determined by the at least one color sensor comprised by the camera of the mobile device. Specifically, the camera of the mobile device may comprise at least three color sensors, such as pixelated color sensors or color pixels, e.g. at least one color sensor for R, G, B colors, and, thus, the measured color value may comprise at least three color coordinates, more specifically at least one color coordinate for each R, G, B color, which may be derived from sensor signals of the color sensors.

Further, the method comprises in step iii. determining a relationship between the measured reference color values and the corresponding known reference color values. The term "relationship" as used herein is a broad term and is to be given its ordinary and customary meaning to a person of ordinary skill in the art and is not to be limited to a special or customized meaning. The term specifically may refer, without limitation, to a predetermined or determinable transformation between color information derived from the image, such as measured reference color values, and corresponding known color information, such as known reference color values. Specifically, the relationship may be or may comprise a mathematical transformation. Thus, the term "relationship" specifically may refer, without limitation, to a predetermined or determinable transformation algorithm for transforming at least one item of color information derived from the image, also referred to as a "measured item of color information", such as at least one measured reference color value, into at least one "real world", "real", "expected" or "true" item of color information, such as one or more items of known color information, specifically known reference color values. The relationship specifically may be or may comprise an invertible or reversible transformation or algorithm. Thus, in the following, whenever reference is made to the relationship, no differentiation is made between the relationship itself and its inverse. Thus, as an example and as the skilled person will recognize, the relationship may be used for transforming the measured item of color information into the true item of color information, and the inverse relationship may be used for the opposite direction, or vice versa. Specifically, in case at least one color transformation matrix is used as or as a part of the relationship, the inverse relationship may be or may comprise the inverse color transformation matrix. Thus, the relationship between color information derived from the image, such as measured reference color values, and corresponding known color information, such as known reference color values, may be invertible such that the relationship may transform color information derived from the image into corresponding known color information or vice versa. For example, the relationship may be or may comprise a linear transformation, represented by a matrix, specifically by a color transformation matrix. The color transformation matrix may be a linear transformation from one predetermined color coordinate system, such as the measured R, G, B color coordinate system, to another color coordinate system, such as true R, G, B color coordinate system. Thus, as an example, the relationship between at least some of the measured reference color values $R_{measured}$, $G_{Measured}$ and $B_{Measured}$ and the corresponding known reference color values $R_{Real}$, $G_{Real}$ and $B_{Real}$ may be or may comprise at least one color transformation matrix:

$$\begin{pmatrix} R_{Real} \\ G_{Real} \\ B_{Real} \end{pmatrix} = \begin{pmatrix} CCM_{11} & CCM_{12} & CCM_{13} \\ CCM_{21} & CCM_{22} & CCM_{23} \\ CCM_{31} & CCM_{32} & CCM_{33} \end{pmatrix} \begin{pmatrix} R_{Measured} \\ G_{Measured} \\ B_{Measured} \end{pmatrix} \qquad (1)$$

The coefficients may determine the relationship. The coefficients $CCM_{ij}$ of the color transformation matrix may be determined by solving the linear equations derived from equation (1). For determining the coefficients and, thus, the relationship, the color coordinates $R_{Measured}$, $G_{Measured}$ and $B_{Measured}$ for a plurality of color reference fields may be measured and equation (1) may be solved correspondingly. In case a plurality of color coordinates for a plurality of color reference fields are measured, equation (1) may be overdetermined, and statistical results may be derived, such as a best fit for the coefficients, including statistical information on uncertainties or deviations, such as standard deviations or deviations of results from expected values, as will be outlined in further detail below.

It shall be noted, however, that, besides a color transformation matrix, other relationships are also possible.

As outlined above, the method comprises in step iv. deriving the at least one item of quality information. The term "item of quality information" as used herein is a broad term and is to be given its ordinary and customary meaning to a person of ordinary skill in the art and is not to be limited to a special or customized meaning. The term specifically may refer, without limitation, to an item of information qualifying or quantifying the quality of the color reference card or a part thereof, with the definition of "quality" as given above. Specifically, the item of quality information may comprise numerical information specifying the quality. Thus, the item of quality information may comprise digital information describing the quality of a color reference card. Specifically, the item of quality information may be or may comprise a numerical value indicating the quality of a color reference card. The item of quality information may also comprise information on the quality of at least one color reference field comprised by the color reference card. The item of quality information may specifically be derived by using the relationship between measured reference color values and corresponding known reference color values which is determined in step iii. For example, as outlined above, the relationship, such as the matrix of eq. (1), may be derived by using statistical methods or fitting. The item of quality information may be derived by using information on the quality of the fitting, such as at least one of a fit residuum or a standard deviation, quantifying the quality of the fitting of the relationship. As another example, the item of quality information may comprise a deviation of color values of the color reference fields. Specifically, the deviation may be a difference in color values comparing expected reference color values with known reference color values. As used herein, the term "expected reference color value" may refer to an anticipated reference color value of the color reference field. Specifically, the expected reference color value may refer to an anticipated measured reference color value obtained by transforming the known color reference value of the color reference field using the relationship determined in step iii.. Alternatively and/or additionally, the expected reference color value may also refer to an anticipated reference color value obtained by transforming the measured color value of the color reference field using the relationship determined in step iii.

The item of quality information may further indicate a color reference field-specific quality of the color reference card. Thus, the item of quality information may comprise a plurality of quality information or a plurality of items of quality information indicating the quality of each color reference field comprised by the color reference card. Specifically, the method may comprise in step iv. deriving the at least one item of quality information for each color reference field of the color reference card. The item of quality information may comprise a quantitative measure for each color reference field on the degree of suitability for being used for a method for determining the concentration of an analyte in a bodily fluid. As an example, the item of quality information may indicate damage of a specific color reference field. For example, the item of quality information may indicate whether the color reference field is damaged, scratched and/or faded, and, thus, whether the color value of the color reference field is distorted. As another example, the item of quality information may indicate a color reference field which cannot be evaluated reasonably, for example because of interfering environmental influences, such as interfering lighting conditions. In both examples, the respective color reference field may be excluded from determining the relationship in step iii.. Thus, summarizing, as an example, the at least one item of quality information specifically may comprise at least one of: an indication of damage of a specific color reference field, specifically indication whether the color reference field is at least one of damaged, scratched, faded or distorted; indication of reasons preventing evaluation of a specific color reference field, specifically indication whether the color reference field is subject to interfering environmental influences, more specifically indication whether the color reference field is subject to interfering lighting conditions.

As outlined above, step iii. of the method comprises determining a relationship between the measured reference color values and the corresponding known reference color values. Specifically, the determination of the relationship may comprise fitting the measured reference color values to the corresponding known reference color values. The fitting may comprise a mathematical relationship between the measured reference color values and the corresponding known reference color values. Thus, deriving of the quality information in step iv. may comprise determining at least one fit residuum quantifying the quality of the fitting. As used herein, the term "fit residuum" may refer to a statistical value indicating the deviation of at least one measured quantity to a mathematical relationship describing the measured quantity. Specifically, the fit residuum may quantify the deviation of measured reference color values to the relationship fitted in step iii. of the method. For example, the fit residuum may be or may comprise at least one sum of squared residuals.

As outlined above, the measured color reference values and the known reference color values specifically, each, may comprise color coordinates in a predetermined color coordinate system, specifically R, G, B color coordinates. The predetermined color coordinate systems may be provided automatically or by human action. For example, the predetermined color coordinate system may be a sRGB color space, wherein "sRGB" stands for "standard Red-Green-Blue". As another example, the predetermined color coordinate system may be a CIE-XYZ color space. However, other options are also feasible. The predetermined color coordinate system may be predetermined by using the camera of the mobile device, and thus, may be provided automatically by using the mobile device. As another example, the color coordinate system may be changed by human action, such as by action of a user of the mobile device.

The relationship between the measured reference color values and the known reference color values, as outlined above, specifically may comprise a color transformation matrix, specifically a color correction matrix, more specifically a color transformation matrix transforming color coordinates of the measured color reference values into color coordinates of the known reference color values or vice a versa. The color transformation matrix may represent a linear transformation and may be invertible.

The at least one item of quality information derived in step iv. may at least partially be derived by using the relationship determined in step iii. and by transforming measured color coordinates of at least one first color reference field into expected color coordinates of at least one second color reference field by using the relationship. By further comparing the expected color coordinates of the second color reference field with measured color coordinates of the second color reference field, the at least one item of quality information may be derived. Specifically, expected color coordinates of the at least one second color reference field may be obtained by transforming measured color coordinates of the at least one first color reference field by using the relationship determined in step iii.. The first and second color reference fields may have similar color reference values, and, thus, may allow comparing the expected color coordinates of the second color reference field with measured color coordinates of the second color reference field.

Further, the at least one item of quality information may be determined by selectively leaving out measured reference color values of at least one selected color reference field in step iii., whereas color coordinates of other color reference fields are taken into account in step iii.. The at least one selected color reference field may specifically be left out for determining the relationship, such as the color transformation matrix, in step iii. The at least one item of quality information, for example the at least one fit residuum, may be derived for this particular set of color reference fields without the at least one first selected color reference field. In order to evaluate the derived item of quality information, a second set of color reference fields may be used to determine the relationship, specifically without a second selected color reference field, specifically being different from the first selected color reference field. For evaluating the quality of the color reference card, specifically of the color reference fields, each of the color reference fields may be selected once to be left out for determining the relationship in step iii.

Thereby, a plurality of items of quality information may be determined by selectively leaving out measured reference color values of a plurality of selected color reference fields, respectively, wherein the items of quality information may be compared in order to identify color reference fields having a low quality, specifically for identifying damaged color reference fields. Thus, when comparing the plurality of items of quality information, a worst offender of color reference fields may be identified by determining the set of color reference fields having a high quality compared to the other sets of color reference fields, specifically by identifying the set of color reference fields having the lowest fit residuum. The worst offender of color reference fields may be left out in step iii.

Thus, generally, a cross-validation of the quality of one or more color reference fields may be performed, by using one or more other color reference for determining at least one expected value and comparing the expected value with a real value of the respective color reference field. Thereby, such as iteratively, the quality of one or more or even all of the color reference fields of the color reference card may be determined. Specifically, damaged or deteriorated color reference fields may be identified.

Thus, color reference fields having a low quality may be marked and may be left out in step iii. The quality of the relationship may be enhanced by selectively leaving out color reference fields having a low quality. The relationship in step iii. may be determined by using only those color reference fields having a high quality, specifically having a low fit residuum.

The color reference card may be configured for being used in a method for determining a concentration of an analyte in a bodily fluid by using a mobile device having a camera. Therein, at least one image of a reagent test region of an optical test strip having a sample of the bodily fluid applied thereto may be captured by the camera. The analyte concentration may be determined based on a color formation reaction of the reagent test region.

In a further aspect of the invention, thus, a method for determining a concentration of an analyte in a bodily fluid is disclosed. The method comprises using a mobile device having at least one camera, the method further comprises using at least one optical test strip and at least one color reference card comprising a plurality of color reference fields having known reference color values.

The method comprises the following steps which, as an example, may be performed in the given order. It shall be noted, however, that a different order is also possible. Further, it is also possible to perform one or more of the method steps once or repeatedly. Further, it is possible to perform two or more of the method steps simultaneously or in a timely overlapping fashion. The method may comprise further method steps which are not listed.

The method further comprises:

a. evaluating the quality of the reference card using the method according to the present invention, such as according to any one of the embodiments disclosed above and/or according to any one of the embodiments disclosed in further detail below;
b. capturing at least one image of at least one reagent test region of the optical test strip having a sample of the bodily fluid applied thereto by using the camera; and
c. determining the analyte concentration based on a color formation reaction of the reagent test region, taking into account the result of step a.

The term "determining the concentration of an analyte in a bodily fluid", also referred to as an "analytical measurement", as used herein is a broad term and is to be given its ordinary and customary meaning to a person of ordinary skill in the art and is not to be limited to a special or customized meaning. The term specifically may refer, without limitation, to a quantitatively and/or qualitatively determination of at least one analyte in an arbitrary sample or aliquot of bodily fluid. For example, the bodily fluid may comprise one or more of blood, interstitial fluid, urine, saliva or other types of body fluids. The result of the determining of the concentration, as an example, may be a concentration of the analyte and/or the presence or absence of the analyte to be determined. Specifically, as an example, the determination may be a blood glucose measurement, thus the result of the determination may for example be a blood glucose concentration. In particular, an analytical measurement result value may be determined by the analytical measurement.

Consequently, the term "analyte concentration value", often also referred to as "analytical measurement result value", as used herein, is a broad term and is to be given its ordinary and customary meaning to a person of ordinary skill in the art and is not to be limited to a special or customized meaning. The term specifically may refer, without limitation, to a numerical indication of an analyte concentration in a sample.

The at least one analyte, as an example, may be or may comprise one or more specific chemical compounds and/or other parameters. As an example, one or more analytes may be determined which take part in metabolism, such as blood glucose. Additionally or alternatively, other types of analytes or parameters may be determined, e.g. a pH value.

The method for determining a concentration of an analyte in a bodily fluid further comprises using the mobile device having the at least one camera. Further, the method comprises using at least one optical test strip.

The term "optical test strip" as used herein is a broad term and is to be given its ordinary and customary meaning to a person of ordinary skill in the art and is not to be limited to a special or customized meaning. The term specifically may refer, without limitation, to an arbitrary element or device configured for performing a color-change detection reaction. The optical test strip may also be referred to as test strip or test element, wherein all three terms may refer to the same element. The optical test strip may particularly have a test field containing at least one test chemical for detecting at least one analyte. The optical test strip, as an example, may comprise at least one substrate, such as at least one carrier, with the at least one test field applied thereto or integrated therein. In particular, the optical test strip may further comprise at least one white area, such as a white field, specifically in a proximity to the test field, for example enclosing or surrounding the test field. The white area may be a separate field independently arranged on the substrate or carrier. However, additionally or alternatively, the substrate or carrier itself may be or may comprise the white area. As an example, the at least one carrier may be strip-shaped, thereby rendering the test element a test strip. These test strips are generally widely in use and available. One test strip may carry a single test field or a plurality of test fields having identical or different test chemicals comprised therein.

As further used herein, the term "reagent test region", also referred to as "test field", is a broad term and is to be given its ordinary and customary meaning to a person of ordinary skill in the art and is not to be limited to a special or customized meaning. The term specifically may refer, without limitation, to a coherent amount of the test chemical, such as to a field or a region, e.g. a field of round, polygonal or rectangular shape, having one or more layers of material, with at least one layer of the test field having the test chemical comprised therein.

The method comprises determining the analyte concentration value based on a color formation of the reagent test region. Thus, the method may be an analytical measurement including inducing a test reaction between the test chemical and a sample of the bodily fluid or a part thereof, such as the at least one analyte, specifically an analyte-specific test reaction, wherein the test reaction includes a color change of the reagent test region indicative of a degree of the test reaction and/or indicative of a presence or a concentration of the analyte. The color formation may include an arbitrary change of at least one optical property of the optical test strip or, specifically, of the reagent test region, which change may be measured or determined optically by using the camera. Specifically, the analytical measurement may be or may comprise a color formation reaction in the presence of the at least one analyte to be determined. The term "color formation reaction" as used herein is a broad term and is to be given its ordinary and customary meaning to a person of ordinary skill in the art and is not to be limited to a special or customized meaning. The term specifically may refer, without limitation, to a chemical, biological or physical reaction during which a color, specifically a reflectance, of at least one element involved in the reaction, changes with the progress of the reaction. The color formation may be detected by the mobile device, such as by a processor of the mobile device, and may be evaluated quantitatively, such as by deriving, from the at least one image, at least one parameter quantifying or characterizing the color formation of the reagent test region due to the presence of the analyte in the sample of the bodily fluid. As an example, one or more of the above-mentioned color coordinates may be used. Thus, the mobile device and specifically the processor of the mobile device may be configured for determining a color change by determining a change of one or more color coordinates taking place due to the detection reaction.

The at least one analyte concentration value is determined from the color formation of the reagent test region. For this purpose, the at least one image may be used. The analyte concentration value, as an example, may be a numerical value indicator of a result of the analytical measurement, such as indicative of the concentration of at least one analyte in the sample, such as a blood glucose concentration.

As an example, when capturing the at least one image of the reagent test region, the at least one color reference card may be in the field of view of the camera and, thus, at least a part of the color reference card may be visible in the at least one image of the at least one part of the reagent test region. As an example, the optical test strip may be placed on top of the color reference card, and/or the color reference card may comprise one or more windows, wherein the color reference card, with the one or more windows, is placed on top of the optical test strip such that the reagent test region is visible through the window. Alternatively, however, it is also possible to capture separate images of the at least one reagent test region and the color reference card.

The use of the color reference card specifically may allow for correcting camera specific or device specific changes in the at least one image of the color of the reagent test region. Thus, typically, cameras and/or mobile devices, without notifying the user, apply one or more evaluation or pre-evaluation algorithms to the image, such as gamma corrections, which have to be taken into account when evaluating the images and determining the at least one analyte concentration value. Specifically, the at least one evaluation or pre-evaluation algorithm may be applied to the captured image in step i.. Thus, the subsequent steps of the method of evaluating the quality of the color reference card may specifically take into account an intensity-corrected image, wherein the intensity correction may comprise the at least one evaluation or pre-evaluation algorithm, such as a gamma correction. Further, steps ii., iii. and iv. of the method of evaluating the quality of the color reference card may be applied to an image having acceptable linear properties, in particular to an image being homogeneously lightened, for example an image without shadows, and/or to an image being intensity-corrected, for example by a gamma correction. By using the at least one color reference card having known optical properties, the mobile device may be set up for calibrating and/or correcting the image, thus taking into account the internal processes of the camera and/or the mobile device when or before determining the at least one analyte concentration value. As outlined above, the method for determining the concentration of an analyte in a bodily fluid comprises the result of the method of evaluating the quality of the color reference card. Therein, a relationship may be used to correct the measured color values of the captured image. Specifically, a relationship having a high quality may be used for the analytical measurement in step c..

The invention further comprises a mobile device according to claim 8, the mobile device having at least one camera, the mobile device further having at least one processor, wherein the mobile device is configured for performing the method of evaluating the quality of a color reference card according to the present invention, such as according to any one of the embodiments disclosed above and/or according to any one of the embodiments disclosed in further detail below.

The mobile device may further be configured for determining the concentration of an analyte in a bodily fluid by using the at least one optical test strip, by performing steps b. and c. of the method for determining a concentration of an analyte in a bodily fluid according to the present invention, such as according to any one of the embodiments disclosed above and/or according to any one of the embodiments disclosed in further detail below.

The term "processor" as used herein is a broad term and is to be given its ordinary and customary meaning to a person of ordinary skill in the art and is not to be limited to a special or customized meaning. The term specifically may refer, without limitation, to an arbitrary logic circuitry configured for performing basic operations of a computer or system, and/or, generally, to a device which is configured for performing calculations or logic operations. In particular, the processor may be configured for processing basic instructions that drive the mobile device, computer or system. As an example, the processor may comprise at least one arithmetic logic unit (ALU), at least one floating-point unit (FPU), such as a math coprocessor or a numeric coprocessor, a plurality of registers, specifically registers configured for supplying operands to the ALU and storing results of operations, and a memory, such as an L1 and L2 cache memory. In particular, the processor may be a multi-core processor. Specifically, the processor may be or may comprise a central processing unit (CPU). Additionally or alternatively, the processor may be or may comprise a microprocessor, thus specifically the processor's elements may be contained in one single integrated circuitry (IC) chip. Additionally or alternatively, the processor may be or may comprise one or more application-specific integrated circuits (ASICs) and/or one or more field-programmable gate arrays (FPGAs) or the like.

The processor may specifically be configured, such as by software programming for performing and/or supporting one or more of the method steps of the method of evaluating the quality of a color reference card. Specifically, the processor may be configured for supporting the capturing of the image of at least a part of the color reference card, such as by prompting the user to capture the image and/or by detecting the color reference card in a field of view and automatically capturing the image. Further, the processor may be configured for identifying color reference fields on the captured image and for determining measured reference color values thereof. The processor may be configured for assigning known reference color values to the corresponding measured color reference fields. Thus, the processor may be configured for determining a relationship between measured reference color values and corresponding known reference color values, for example by fitting the measured reference color values to the corresponding known reference color values. The processor may determine the relationship, for example the linear transformation such as the color transformation matrix, using a linear optimization approach. Further, the processor may be configured for deriving the at least one item of quality information on the quality of the color reference card by using the relationship.

Further, the processor may be configured, such as by software programming, for performing and/or supporting the method steps of the method for determining the concentration of an analyte in a bodily fluid. Specifically, the processor may be configured for supporting the capturing of the at least one image of the at least one reagent test region of the optical test strip having the sample of the bodily fluid applied thereto by using the camera of the mobile device. The processor may further be configured for determining at least one analyte concentration value from color formation of the reagent test region, such as by evaluating the image, deriving the change of one or more color coordinates taking place due to the color formation reaction and transforming the change of one or more color coordinates into the at least one analyte concentration value. The processor specifically may be configured for supporting one or more or all of steps b. and c. of the method for determining the concentration of an analyte in a bodily fluid, such as for capturing the at least one image as well as for further providing the indication to the user that the capturing of the at least one image requires capturing of at least one image of at least one color reference card and for determining the analyte concentration. The processor may further be configured for supporting sample application to the optical test strip, such as by providing user guidance, e.g. in a visual format or in an audible format. The processor may further be configured for supporting the capturing of the at least one image, e.g. by automatically detecting the optical test strip or a part thereof in a field of view and/or by prompting the user to capture the image.

In a further aspect of the present invention, a kit is disclosed, the kit comprising at least one mobile device according to the present invention, such as according to any one of the embodiments disclosed above and/or according to any one of the embodiments disclosed in further detail below, further comprising at least one color reference card, the color reference card comprising a plurality of color reference fields having known reference color values. The term "kit" as used herein is a broad term and is to be given its ordinary and customary meaning to a person of ordinary skill in the art and is not to be limited to a special or customized meaning. The term specifically may refer, without limitation, to a combination of at least two items which might as an example, may be supplied conjointly in a package, which may interact in order to fulfill at least one common purpose.

The kit may further comprise the at least one optical test strip having the at least one reagent test region.

The invention further comprises a computer program according to claim 12, the computer program comprising instructions which, when the program is executed by the mobile device according to the present invention, such as according to any one of the embodiments disclosed above and/or according to any one of the embodiments disclosed in further detail below, cause the processor of the mobile device to perform the method of evaluating the quality of a color reference card according to the present invention, such as according to any one of the embodiments disclosed above and/or according to any one of the embodiments disclosed in further detail below.

The computer program may further comprise instructions which, when the program is executed by the mobile device, may cause the processor of the mobile device to perform steps b. and c. of the method for determining the concentration of an analyte in a bodily fluid.

The invention further comprises a computer-readable storage medium according to claim 14, the computer-readable storage medium comprising instructions which, when the program is executed by the mobile device according to the present invention, such as according to any one of the embodiments disclosed above and/or according to any one of the embodiments disclosed in further detail below, cause the processor of the mobile device to perform the method of evaluating the quality of a color reference card according to the present invention, such as according to any one of the embodiments disclosed above and/or according to any one of the embodiments disclosed in further detail below.

The computer-readable storage medium may further comprise instructions which, when the program is executed by the mobile device, may cause the processor of the mobile device to perform steps b. and c. of the method for determining the concentration of an analyte in a bodily fluid.

As used herein, the term "computer-readable storage medium" specifically may refer to a non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

The computer program may also be embodied as a computer program product. As used herein, a computer program product may refer to the program as a tradable product. The product may generally exist in an arbitrary format, such as in a paper format, or on a computer-readable data carrier and/or on a computer-readable storage medium. Specifically, the computer program product may be distributed over a data network.

As an example, the at least one item of quality information may be or may comprise a fit residuum quantifying the quality of the fitting. A high value of the fit residuum may indicate a non-linear transformation between the measured and the known reference color values. Therefore, the color correction of the image by using the color transformation matrix may be invalid.

Additionally or alternatively, the at least one item of quality information may be or may comprise at least one item of quality information derived by assessing the quality of the color correction by using one or more test fields having known reference color values. The measured color value of the test field may be transformed using the relationship, such as the color transformation matrix, and, thus, the transformed color values may be compared to the known reference value of the test field. The test field may be an additional color field comprised by the color reference card and/or may be selected from the plurality of color reference fields. The test fields may also be selected dynamically from the plurality of color reference fields, for example in such a way, that the color value of the selected color reference fields may be similar to the color value of the reagent test region. Therefore, the evaluation of the color correction may be in accordance with the color formation of the reagent test region. Thus, the quality and the accuracy of the color correction may be assessed by using the item of quality information comprising the deviation of the transformed color value of the test field to the corresponding known reference color value.

The usability of one or more single color reference fields for the color correction may be assessed using an exemplary embodiment of the method of evaluating the quality of the color reference card. As an example, one or more of the color reference fields may be selectively left out when determining the relationship, specifically the color transformation matrix. The relationship, specifically the color transformation matrix, may be determined using the remaining color reference fields, specifically without the selected color reference field. The color reference field that has been left out may be used as a test field. The color transformation matrix may be determined by selecting each of the color reference fields as a test field at least once.

For each set of color reference fields and test fields, the at least one item of quality information may be derived, such as the fit residuum and the deviation of the transformed color value of test field to the test field's known color reference value. The item of quality information may allow for an evaluation of the quality of the color correction regarding each of the color reference fields. In case, a damaged color reference field may be left out in the determination of the color transformation matrix, the corresponding fit residuum will be lower compared to the each other set of fit residuum and the deviation of the expected reference color value from the known color value will increase for the corresponding color reference field. Color reference fields having a low value of the item of quality information, such as below a threshold, may be left out for the determination of the color transformation matrix. Alternatively and/or additionally, the analyte measurement may be cancelled due to a defect color reference card and/or bad image quality.

The method of evaluating the quality of the color reference card may be comprised by the method for determining the concentration of an analyte in a bodily fluid using the camera of the mobile device. The method may further comprise using the at least one optical test strip, wherein the optical test strip, specifically the reagent test region, may undergo a color formation reaction when a sample of a bodily fluid is applied thereto. The color subspace of the corresponding color formation reaction may be determined using a photospectrometer. The color values of the color reference fields may be selected from the color subspace of the color formation reaction.

The relationship between measured reference color values and known reference color values, as outlined above, may be determined by using the at least one color transformation matrix. The fit residuum quantifying the quality of the fitting may be used to evaluate the quality of the color transformation matrix.

In Table 1, an exemplary embodiment of the method of evaluating the quality of the color reference card is shown. Each of the color reference fields has been selected as a test field and, thus, has been left out for determining the color transformation matrix. The corresponding fit residuum and the deviation of the transformed measured color value of the test field to its known reference color value has been calculated. In this example, the color reference card has no visible damages and, thus, the color reference card may have a high quality which may be seen in a low fit residuum and a low deviation.

*Table 1: An exemplary embodiment of assessing the quality of a color reference card or of a part thereof, the color reference card comprising a plurality of color reference fields, and, in this example, having a high quality.*

|  | Field No. 1 | Field No. 2 | Field No. 3 | Field No. 4 | Field No. 5 | Field No. 6 | Field No. 7 | Field No. 8 |
|---|---|---|---|---|---|---|---|---|
| Deviation of test field from true value | 1.3 | 0.92 | 1.8 | 0.64 | 1.3 | 1.6 | 1.8 | 3.1 |
| Fit residuum in matrix fitting (all other fields) | 1.2 | 1.2 | 1.0 | 1.2 | 1.1 | 1.1 | 1.1 | 0.9 |

Further, Table 2 shows an example of a color reference card comprising at least partially damaged color reference fields. In this example, color reference fields no.5 and no.6 may be damaged. The result of the method the evaluation of the quality of color reference card are shown in the two upper rows of Table 2. The deviation of the transformed measured color values of the damaged color reference fields to their known reference color values are high compared to each of the other color reference fields. Further, the fit residuum may be lowered in case the damaged color reference fields is excluded from the determination of the color transformation matrix. Defect color reference fields may be determined by identifying the color reference fields having a low quality, e.g. a lower fit residuum and a higher deviation. In case, one of the worst offender may be excluded from the fitting, the fit residuum and the deviation may be improved. It may be also possible to exclude one or even more of the defect color reference fields to improve the quality of the fitting of the color transformation matrix.

*Table 2: An exemplary embodiment of assessing the quality of a color reference card or of a part thereof, the color reference card comprising a plurality of color reference fields, and, in this example, having a low quality, such as due to damaged color reference fields.*

| Fields excluded |  | Field No. 1 | Field No. 2 | Field No. 3 | Field No. 4 | Field No. 5 | Field No. 6 | Field No. 7 | Field No. 8 |
|---|---|---|---|---|---|---|---|---|---|
| None | Deviation of test field from true value | 20.4 | 19.7 | 16.3 | 20.9 | **74.2** | **30.8** | 20.2 | 19.0 |
|  | Fit residuum in matrix fitting (all other fields) | 23.6 | 23.9 | 24.0 | 23.8 | **9.9** | **18.5** | 23.6 | 23.4 |
| Worst offender | Deviation | 1.3 | 8.3 | 7.0 | 8.6 | - | **40.3** | 12.4 | 13.2 |
|  | Fit residuum | 11.4 | 11.1 | 11.1 | 11.1 | - | **1.4** | 11.0 | 11.2 |
| Two worst offenders | Deviation | 3.7 | 2.0 | 1.7 | 2.3 | - | - | 1.0 | 2.5 |
|  | Fit residuum | 1.0 | 1.3 | 1.4 | 1.3 | - | - | 1.5 | 1.3 |

The methods and devices according to the present invention provide a large number of advantages over similar methods and devices known in the art. The methods and devices described herein may provide a user-friendly and reliable method of determining the concentration of at least one analyte in a bodily fluid while ensuring a high accuracy of the analytical measurement. Specifically, the color reference card may be used for correcting the measured color values by taking into account the relationship, specifically the color transformation matrix. Thus, the color correction, specifically the color correction of the captured image of the reagent test region, may enhance the accuracy of the analytical measurement.

Further, the quality of the color reference card may be checked by using the method of evaluating the quality of the color reference card. Specifically, the color reference card may be checked before or when it is used for the analytical measurement. The present methods and devices may ensure a high reliability of the color reference card and, thus, a high accuracy of the analytical measurement.

Moreover, color reference cards having a defect may be identified. Color reference cards may be sorted out and/or only a limited number of color reference fields may be used for the actual analytical measurement. Specifically, one or more color reference fields which are not intact, for example damaged color reference fields, may be excluded from the analytical measurement. Thus, the present methods and devices enhance safety over known methods and devices.

Further, the methods and devices according to the present invention enable the use of a greater variety of models of mobile devices for the analytical measurement. By using the quality checked color reference card, the analytical measurement may provide means for an accurate analytical measurement of the analyte concentration in a bodily fluid even for a great variety of different mobile devices.

Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments, but rather by the appended claims. The embodiments are schematically depicted in the Figures. Therein, identical reference numbers in these Figures refer to identical or functionally comparable elements.

In the Figures:

Figure 1a-b     show embodiments of a color reference card in a perspective view;

Figure 2     shows an embodiment of a mobile device and of a kit comprising the mobile device, a color reference card and an optical test strip, in a perspective view;

Figure 3     shows a flow chart of an embodiment of a method of evaluating the quality of a color reference card; and

Figure 4     shows a flow chart of an embodiment of a method for determining the concentration of at least one analyte in a bodily fluid.

Detailed description of the embodiments

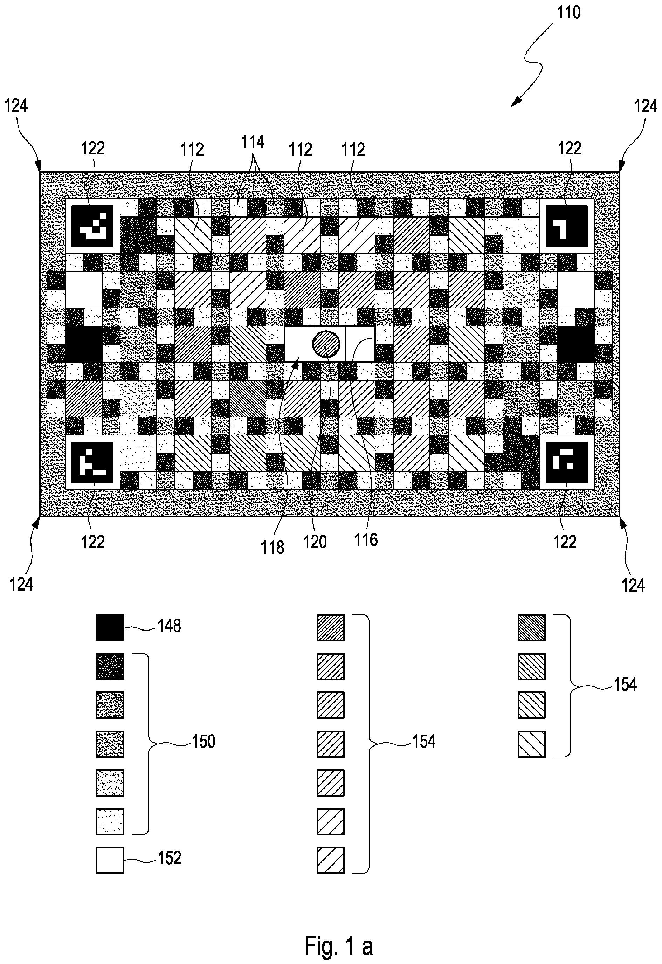

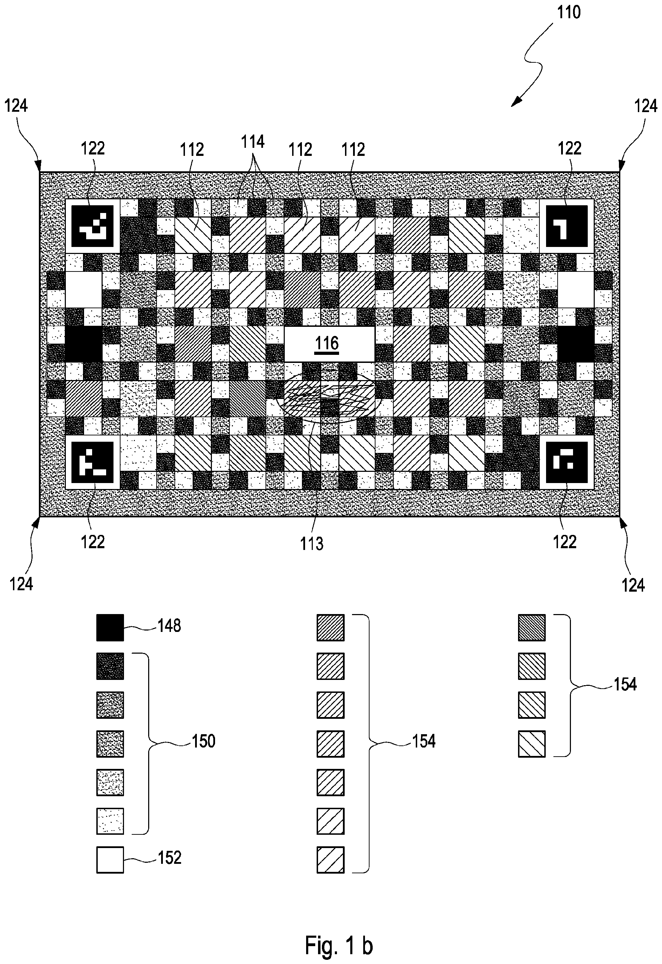

In Figures 1a-b, exemplary embodiments of a color reference card 110 are shown in a perspective view. The color reference card 110 comprises a plurality of color reference fields 112 having known reference color values. The color reference fields 112 may be in an intact state, as it is visible in Figure 1a. The color reference fields 112 may also be at least partially in a defective state, for example by being damaged, scratched or the like, as symbolically depicted by the defective color reference fields 113 in Figure 1b.

The color reference fields 112 may be arranged on the surface of the color reference card 110, such as on a substrate of the color reference card 110. In particular, the color reference fields 112 may be distributed equally over the surface of the color reference card 110, specifically in such a way that the plurality of color reference fields 112 may be distributed over the entire surface of the color reference card 110. As an example, the color reference fields 112 may be arranged in matrix pattern, such as a rectangular matrix pattern. However, the color reference fields 112 may also be arranged in other ways, such as separately from each other. For example, the color reference card 110 may comprise a plurality of gray color reference fields 114 surrounding the color reference fields 112. The color reference fields 112 and the gray color reference fields 114 may not overlap each other. In an exemplary embodiment of the color reference card 110, the color reference fields 112 and the gray color reference fields 114 may be printed on a pre-printed gray colored background of the color reference card 110. Thus, the color reference fields 112 may overlap with the gray colored background of the color reference card 110.

The color reference card 110 may further comprise at least one window 116. Thus at least one optical test strip 118 or a part thereof may be visible through the window 116 when the color reference card 110 is placed on top of the optical test strip 118. Specifically, at least one reagent test region 120 comprised by the optical test strip 118 may be visible through the window 116 of the color reference card 110. As another example, the color reference card 110 may comprise the optical test strip 118 having at least one reagent test region 120, specifically in such a way that the at least one reagent test region 120 is accessible and visible.

Further, the color reference card 110 may comprise at least one marker 122. The marker 122 may be or may, as an example, comprise at least one of a position marker, such as an ArUco code, a barcode, a QR-code, a label or a combination thereof. In Figures 1a and 1b, the marker 122 specifically may comprise one or more ArUco codes, such as in the corners of a rectangular matrix comprising the color reference fields 112. Thus, generally, the marker 122 may be arranged in at least one corner 124 of the color reference card 110. For example, at least one marker 122 may be arranged in each of the corners 124 of the color reference card 110, specifically in such a way that the marker 122 may be visible together with the plurality of color reference fields 112. Further, the marker 122 may comprise information about the orientation of the color reference card 110.

In Figures 1a and 1b, the color reference fields 112 may comprise fields having different colors, for example, color reference fields 112 having a black color (denoted by reference number 148), color reference fields 112 having one or more gray colors (denoted by reference number 150), color reference fields 112 having a white color (denoted by reference number 152) and/or color reference fields 112 having one or more colors, such as a blue color, a green color, a red color and/or a mixed color thereof (denoted by reference number 154). The gray color reference fields 114 may comprise, similar to the color reference fields 112, fields having one or more gray colors (denoted by reference number 150).

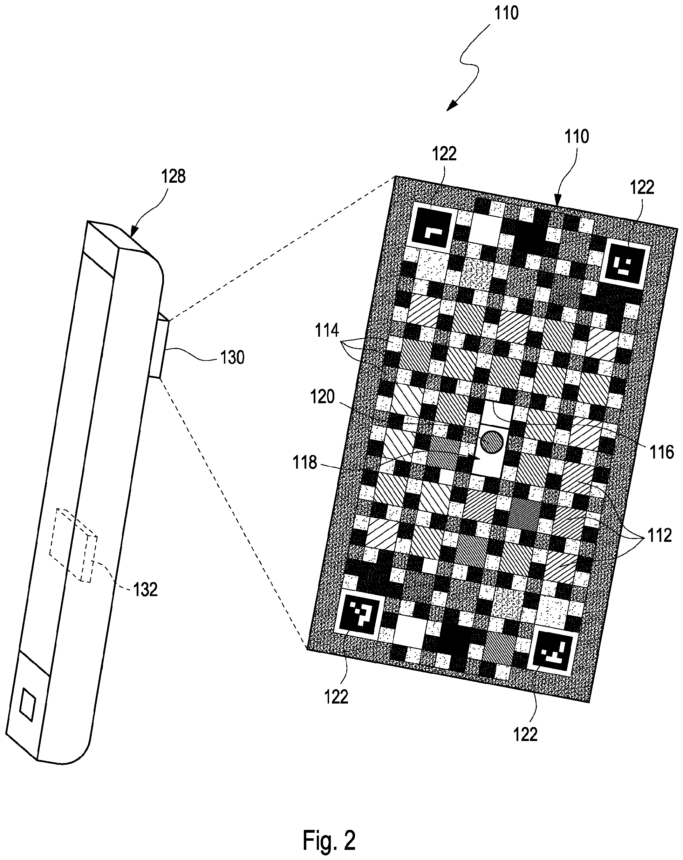

In Figure 2, an exemplary embodiment of a kit 126 is shown in a perspective view. The kit 126 comprises at least one mobile device 128 and at least one color reference card 110. Further, the kit 126 may comprise the at least one optical test strip 118.

The mobile device 128 may be or may comprise at least one of a cell phone, a smartphone, a tablet computer or the like. Further, the mobile device 128 has at least one camera 130. The camera 130 of the mobile device 128 may be configured for recording images, specifically color images. Thus, the camera 130 may be a color camera and may comprise at least three color sensors, such as at least one color sensor for the R, G, B colors.

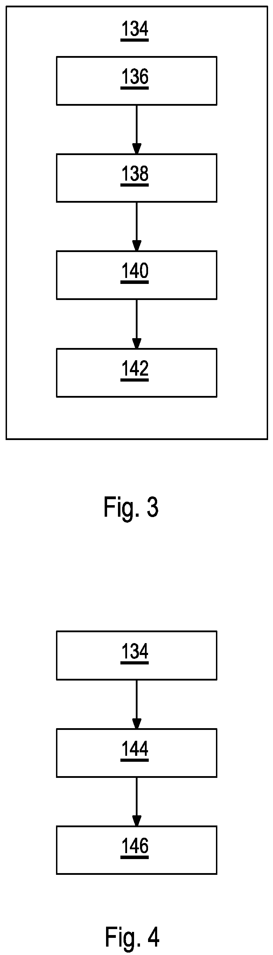

Further, the mobile device 128 may comprise at least one processor 132. The processor 132 may be configured, specifically by software programming, to perform one or more of the method steps of the method of evaluating the quality of the color reference card 110. Further, the processor 132 may be configured for supporting one or more of steps b. and c. of the method for determining the concentration of an analyte in a bodily fluid. Exemplary embodiments of the above-mentioned methods are shown in Figures 3 and 4, respectively, and will be described in further detail below. Thus, reference may be made to the description of Figures 3 and 4.

The processor 132 may specifically be configured for supporting the capturing of at least one image of the color reference card 110. Specifically, the processor 132 may prompt a user of the mobile device 128 to capture the image. Additionally or alternatively, the processor 132 may be configured for automatically capturing the image of the color reference card 110, specifically when the color reference card 110 may be in a field of view.

The color reference card 110 specifically may be embodied according to any one of the embodiments disclosed in Figures 1a-b as described in further detail above. The color reference card 110 comprises the plurality of color reference fields 112 having known reference color values. Further, the color reference card 110 may comprise the at least one window 116. Thus, the optical test strip 118 may be visible through the window 116 of the color reference card 110, specifically when the color reference card 110 may be placed on top of the optical test strip 118 such that both, the color reference card 110 and the optical test strip 118, may be visible on the at least one image captured by the camera 130 of the mobile device 128. Specifically, the at least one reagent test region 120 of the optical test strip 118 may be visible through the window 116 of the color reference card 110.

The color reference card 110 may further comprise the at least one marker 122. The marker 122 may be arranged on at least one surface of the color reference card 110 such that the marker 122 may be detectable by the camera 130 of the mobile device 128. The at least one marker 122 may be used for identifying the orientation of the color reference card 110. Specifically, the processor 132 of the mobile device 128 may be configured for detecting the marker 122 on an image captured by the camera 130 and for further retrieving information about the orientation of the color reference card 110.

Figure 3 shows a flow chart of an exemplary embodiment of a method of evaluating the quality of a color reference card 110 (reference number 134 in Figures 3 and 4). The method comprises the following steps, which may specifically be performed in the given order. Still, a different order may also be possible. It may be possible to perform two or more of the method steps fully or partially simultaneously. It may further be possible to perform one, more than one or even all of the method steps once or repeatedly. The method may comprise additional method steps that are not listed.

The method comprises:

i. (denoted with reference number 136) capturing at least one image of at least a part of the color reference card 110 by using the at least one camera 130 of the at least one mobile device 128;
ii. (denoted with reference number 138) determining measured reference color values for at least some of the color reference fields 112 from the image;
iii. (denoted with reference number 140) determining a relationship between at least some of the measured reference color values and the corresponding known reference color values; and
iv. (denoted with reference number 142) deriving at least one item of quality information on the quality of the color reference card 110 by using the relationship of step iii.

In step i., the capturing of the at least one image of at least a part of the color reference card 110 may be initiated by the processor 132 of the mobile device 128. For example, the processor 132 may be configured for prompting the user to capture the image of the color reference card 110. As another example, the processor 132 may be configured for detecting the color reference card 110 in a field of view and further for automatically capturing the image by using the camera 130 of the mobile device 128.

The marker 122, which may be comprised by the color reference card 110, may be visible on the image captured in step i.. Thus, the processor 132 may be configured for retrieving information about the orientation of the color reference card 110. Further, a computer vision process and/or an image analysis may be used to identify the color reference fields 112 comprised by the color reference card 110 and may determine measured reference color values for at least some of the color reference fields 112. For example, the measured reference color values may comprise color coordinates in a predetermined color coordinate system, specifically R, G, B color coordinates. By identifying color reference fields 112 on the color reference card 110, known reference color values may be assigned to the measured color reference fields 112. Thus, the mobile device 128 may comprise a data storage device which specifically may be configured for storing the known reference color values of the plurality of color reference fields 112. The known reference color values may also comprise color coordinates in a predetermined color coordinate system, for example R, G, B color coordinates.

Further, in step iii., the relationship between measured reference color values and the corresponding known reference color values is determined. Thus, step iii. may comprise fitting the measured reference color values to the corresponding known reference color values. For example, the relationship may be or may comprise a linear transformation, represented by a matrix, such as a color transformation matrix. The color transformation matrix may be used for correcting measured color values by transforming measured color values into true color values. Specifically, the color transformation matrix may be determined in step iii. by fitting the measured reference color values to the corresponding known color reference values. The color transformation matrix determined in step iii. may be used for a method of determining the concentration of an analyte in a bodily fluid as will be described in further detail below.

In step iv., the at least one item of quality information on the quality of the color reference card 110 is derived by using the relationship of step iii., specifically the color transformation matrix. As an example, step iv. may comprise determining at least one fit residuum quantifying the quality of the fitting. Specifically, the fit residuum may quantify a deviation of the fitting to measured reference color values. For example, the fit residuum may be or may comprise a sum of squared residuals.

As another example, the at least one item of quality information may at least partially be derived by using the relationship in step iii. and by transforming measured color coordinates of at least one first color reference field 112 into expected color coordinates of at least one second color reference field 112 by using the relationship, specifically by using the color transformation matrix. Thus, the item of quality information may at least partially be derived by comparing the expected color coordinates of the second color reference field 112 with measured color coordinates of the second color reference field 112.

As a further example, the at least one item of quality information may be derived by selectively leaving out measured color values of at least one selected color reference field 112 in step iii.. The color coordinates of other color reference fields 112 may be taken into account in step iii.. Thus, a fit residuum may be derived for a set of color reference fields 112 leaving out the one selected color reference field 112. This may be repeated at least once, twice or even more than twice, specifically in such a way that each of the color reference fields 112 may be selected once to be left out. Thereby, a plurality of items of quality information may be determined by selectively leaving out measured reference color values of a plurality of selected color reference fields 112. Thus, the items of quality information may be compared in order to identify color reference fields 112 having a low quality, specifically for identifying damaged color reference fields 112. Damaged color reference fields 112 and/or color reference fields 112 having a low quality may be excluded from determining the relationship in step iii..

The method of evaluating the quality of a color reference card 110 may be at least partially computer implemented. Specifically, the mobile device 128 may be configured for executing a computer program comprising instructions which, when the program is executed by the mobile device 128, cause the processor 132 of the mobile device 128 to perform the method of evaluating the quality of a color reference card 110.

In Figure 4, a flow chart of an exemplary embodiment of a method for determining the analyte concentration in a bodily fluid is shown. The method comprises using the at least one mobile device 128 having the at least one camera 130. The method further comprises using the at least one optical test strip 118 and the at least one color reference card 110 comprising a plurality of color reference fields 112 having known reference color values.

The method comprises the following steps, which specifically may be performed in the given order. Still, a different order may also be possible. It may be possible to perform two or more of the method steps fully or partially simultaneously. It may further be possible to perform one, more than one or even all of the method steps once or repeatedly. The method may comprise additional method steps that are not listed.

The method comprises:

   a. (denoted with reference number 134) evaluating the quality of the reference card 110 using the method of evaluating the quality of a color reference card 110;
   b. (denoted with reference number 144) capturing at least one image of at least one reagent test region 120 of the optical test strip 118 having a sample of the bodily fluid applied thereto by using the camera 130; and
c. (denoted with reference number 146) determining the analyte concentration based on a color formation reaction of the reagent test region 120, taking into account the result of step a.

In particular, evaluating the quality of the color reference card 110 in step a. of the method may comprise the method according to the exemplary embodiment described in Figure 3 above. Thus, the following steps of the analytical measurement, specifically steps b. and c., may be performed in case the quality of the color reference card 110 has been evaluated as being a high quality. Specifically, the analytical measurement may be performed in case the item of quality information indicates that the color reference card 110 is of a high quality and, thus, the relationship determined in step iii. may be a highly accurate relationship.

Thus, the processor 132 of the mobile device 128 may receive and/or process the item of quality information derived in step iv. of the method of evaluating the quality of the color reference card 110. The processor 132 may further initiate the analytical measurement, in particular steps b. and c., in case the item of quality information indicates a high quality of the color reference card 110. For example, the processor 132 may initiate the further method steps by prompting the user to apply the sample of bodily fluid onto the reagent test region 120 of the optical test strip 118.

In step b., the capturing of the image of the reagent test region 120 may be performed by the processor 132, for example by prompting the user to capture the image and/or by automatically capturing the image.

Further, the analytical measurement may comprise detecting a color value of the reagent test region 120 having the sample of the bodily fluid applied thereto and determining the analyte concentration based on the color formation reaction of the reagent test region 120, taking into account the result of step a.. Specifically, the relationship determined in step iii. may be used to correct measured color values of the color formation reaction, for example by using the color transformation matrix. The analyte concentration may be determined by using the corrected color values.

The method for determining the concentration of an analyte in a bodily fluid may at least partially be computer implemented, specifically steps b. and c. of the method. The mobile device 128 may specifically be configured for executing the computer program, which when executed by the mobile device 128, cause the processor 132 of the mobile device 128 to perform steps b. and c. of the method. The processor 132 may specifically be configured for capturing the at least one image of the reagent test region 120, such as by prompting the user to capture the at least one image and/or by automatically capturing the at least one image. For example, the image captured in step b. of the method for determining the analyte concentration of a bodily fluid may be identical to the image captured in step i. of the method of evaluating the quality of the color reference card 110. Thus, the at least one captured image may comprise at least part of the color reference card 110 and the at least one reagent test region 120 of the optical test strip 118.

Further, the processor 132 may be configured, specifically by software programming, for determining the analyte concentration based on the color formation reaction of the reagent test region 120. The processor 132 may be configured for determining the analyte concentration by evaluating the captured image, deriving a change of one or more color coordinates taking place during the color formation reaction and transforming the change of the at least one color coordinate into the analyte concentration value. Specifically, the processor 132 may be configured for using the relationship determined in step iii. of the method of evaluating the quality of the color reference card 110 for deriving a true color value from the captured image. Thus, the processor 132 may correct the measured color values of the captured image by transforming measured color values into true color values using the color transformation matrix determined in step iii. of the method of evaluating the quality of the color reference card 110.

List of reference numbers

**[0111]**

| | |
|---|---|
| 110 | color reference card |
| 112 | color reference field |
| 113 | defective color reference fields |
| 114 | gray color reference field |
| 116 | window |
| 118 | optical test strip |
| 120 | reagent test region |
| 122 | marker |
| 124 | corner |
| 126 | kit |
| 128 | mobile device |
| 130 | camera |
| 132 | processor |

134    evaluating the quality of a color reference card
136    capturing at least one image of at least a part of the color reference card
138    determining measured reference color values
140    determining a relationship
142    deriving at least one item of quality information
144    capturing at least one image of at least one reagent test region
146    determining the analyte concentration
148    fields of black color
150    fields of gray color
152    fields of white color
154    fields of color

**Claims**

1.  A method of evaluating the quality of a color reference card (110), wherein the quality of the color reference card (110) refers to a state of the color reference card (110) indicating whether or not the color reference card (110) is usable for a method for determining the concentration of an analyte in a bodily fluid and/or to the degree of suitability or the degree of reliability of the color reference card (110) for being used for the method for determining the concentration of the analyte in the bodily fluid, the color reference card (110) comprising a plurality of color reference fields (112) having known reference color values, the method comprising the following steps:

    i. capturing at least one image of at least a part of the color reference card (110) by using at least one camera (130) of at least one mobile device (128);
    ii. determining measured reference color values for one or more of the color reference fields (112) from the image;
    iii. determining a relationship between one or more of the measured reference color values and the corresponding known reference color values; and
    iv. deriving at least one item of quality information on the quality of the color reference card (110) by using the relationship of step iii.

2.  The method according to the preceding claim, wherein the determining of the relationship in step iii. comprises fitting the measured reference color values to the corresponding known reference color values, wherein the deriving of the quality information in step iv. comprises determining at least one fit residuum quantifying the quality of the fitting.

3.  The method according to any one of the preceding claims, wherein the relationship between the measured reference color values and the known reference color values comprises a color transformation matrix.

4.  The method according to any one of the preceding claims, wherein the at least one item of quality information in step iv. at least partially is derived by using the relationship determined in step iii. and by transforming measured color coordinates of at least one first color reference field (112) into expected color coordinates of at least one second color reference field (112) by using the relationship and by further comparing the expected color coordinates of the second color reference field (112) with measured color coordinates of the second color reference field (112).

5.  The method according to any one of the preceding claims, wherein the at least one item of quality information is determined by selectively leaving out measured reference color values of at least one selected color reference field (112) in step iii., whereas color coordinates of other color reference fields (112) are taken into account in step iii..

6.  The method according to the preceding claim, wherein a plurality of items of quality information is determined by selectively leaving out measured reference color values of a plurality of selected color reference fields (112), respectively, wherein the items of quality information are compared in order to identify color reference fields (112) having a low quality.

7.  A method for determining the concentration of an analyte in a bodily fluid, the method comprising using a mobile device (128) having at least one camera (130), the method further comprising using at least one optical test strip (118) and at least one color reference card (110) comprising a plurality of color reference fields (112) having known reference color values, wherein the method comprises:

    a. evaluating the quality of the reference card (110) using the method according to any of the preceding claims;

b. capturing at least one image of at least one reagent test region (120) of the optical test strip (118) having a sample of the bodily fluid applied thereto by using the camera (130); and

c. determining the analyte concentration based on a color formation reaction of the reagent test region (120), taking into account the result of step a.

8. A mobile device (128) having at least one camera (130), the mobile device (128) further having at least one processor (132), wherein the mobile device (128) is configured for performing the method of evaluating the quality of a color reference card (110) according to any one of the claims 1-6.

9. The mobile device (128) according to the preceding claim, wherein the mobile device (128) is further configured for determining the concentration of an analyte in a bodily fluid by using at least one optical test strip (118), by performing steps b. and c. of the method according to claim 7.

10. A kit (126), comprising at least one mobile device (128) according to claim 8 or 9, further comprising at least one color reference card (110), the color reference card (110) comprising a plurality of color reference fields (112) having known reference color values.

11. The kit (126) according to the preceding claim, the kit (126) further comprising at least one optical test strip (118) having at least one reagent test region (120).

12. A computer program comprising instructions which, when the program is executed by the mobile device (128) according to claim 8 or 9, cause the mobile device (128) to perform the method of evaluating the quality of a color reference card (110) according to any one of the claims 1-6.

13. The computer program according to the preceding claim, further comprising instructions which, when the program is executed by the mobile device (128), cause the mobile device (128) to perform steps b. and c. of the method according to claim 7.

14. A computer-readable storage medium comprising instructions which, when executed by the mobile device (128) according to claim 8 or 9, cause mobile device (128) to perform the method of evaluating the quality of a color reference card (110) according to any one of the claims 1-6.

15. The computer-readable storage medium according to the preceding claim, further comprising instructions which, when executed by the mobile device (128), cause the mobile device (128) to perform steps b. and c. of the method according to claim 7.

**Patentansprüche**

1. Verfahren zum Beurteilen der Qualität einer Farbreferenzkarte (110), wobei sich die Qualität der Farbreferenzkarte (110) auf einen Zustand der Farbreferenzkarte (110), der angibt, ob die Farbreferenzkarte (110) für ein Verfahren zum Bestimmen der Konzentration eines Analyten in einer Körperflüssigkeit verwendet werden kann oder nicht, und/oder auf den Eignungsgrad oder den Zuverlässigkeitsgrad der Farbreferenzkarte (110) zur Verwendung für das Verfahren zum Bestimmen der Konzentration des Analyten in der Körperflüssigkeit bezieht, wobei die Farbreferenzkarte (110) eine Vielzahl von Farbreferenzfeldern (112) mit bekannten Referenzfarbwerten umfasst, wobei das Verfahren die folgenden Schritte umfasst:

   i. Aufnehmen mindestens eines Bildes von mindestens einem Teil der Farbreferenzkarte (110) unter Verwendung mindestens einer Kamera (130) von mindestens einer mobilen Vorrichtung (128);
   ii. Bestimmen gemessener Referenzfarbwerte für ein oder mehrere der Farbreferenzfelder (112) aus dem Bild;
   iii. Bestimmen einer Beziehung zwischen einem oder mehreren der gemessenen Referenzfarbwerte und den entsprechenden bekannten Referenzfarbwerten; und
   iv. Herleiten mindestens eines Qualitätsinformationspunktes zur Qualität der Farbreferenzkarte (110) unter Verwendung der Beziehung von Schritt iii.

2. Verfahren nach dem vorstehenden Anspruch, wobei das Bestimmen der Beziehung in Schritt iii. das Anpassen der gemessenen Referenzfarbwerte an die entsprechenden bekannten Referenzfarbwerte umfasst, wobei das Herleiten der Qualitätsinformationen in Schritt iv. das Bestimmen mindestens eines Fit-Residuums, das die Qualität der Anpassung quantifiziert, umfasst.

3. Verfahren nach einem der vorstehenden Ansprüche, wobei die Beziehung zwischen den gemessenen Referenzfarbwerten und den bekannten Referenzfarbwerten eine Farbtransformationsmatrix umfasst.

4. Verfahren nach einem der vorstehenden Ansprüche, wobei der mindestens eine Qualitätsinformationspunkt in Schritt iv. mindestens teilweise unter Verwendung der in Schritt iii. bestimmten Beziehung und durch Umwandeln gemessener Farbkoordinaten von mindestens einem ersten Farbreferenzfeld (112) in erwartete Farbkoordinaten von mindestens einem zweiten Farbreferenzfeld (112) unter Verwendung der Beziehung und ferner durch Vergleichen der erwarteten Farbkoordinaten des zweiten Farbreferenzfeldes (112) mit gemessenen Farbkoordinaten des zweiten Farbreferenzfeldes (112) hergleitet wird.

5. Verfahren nach einem der vorstehenden Ansprüche, wobei der mindestens eine Qualitätsinformationspunkt durch selektives Weglassen gemessener Referenzfarbwerte von mindestens einem ausgewählten Farbreferenzfeld (112) in Schritt iii. bestimmt wird, wohingegen Farbkoordinaten anderer Farbreferenzfelder (112) in Schritt iii. berücksichtigt werden.

6. Verfahren nach dem vorstehenden Anspruch, wobei eine Vielzahl von Qualitätsinformationspunkten durch selektives Weglassen gemessener Referenzfarbwerte von jeweils einer Vielzahl von ausgewählten Farbreferenzfeldern (112) bestimmt wird, wobei die Qualitätsinformationspunkte verglichen werden, um Farbreferenzfelder (112) mit einer geringen Qualität zu identifizieren.

7. Verfahren zum Bestimmen der Konzentration eines Analyten in einer Körperflüssigkeit, wobei das Verfahren das Verwenden einer mobilen Vorrichtung (128) mit mindestens einer Kamera (130) umfasst, wobei das Verfahren ferner das Verwenden mindestens eines optischen Teststreifens (118) und mindestens einer Farbreferenzkarte (110) umfasst, die eine Vielzahl von Farbreferenzfeldern (112) mit bekannten Referenzfarbwerten umfasst, wobei das Verfahren Folgendes umfasst:

   a. Beurteilen der Qualität der Referenzkarte (110) unter Anwendung des Verfahrens nach einem der vorstehenden Ansprüche;
   b. Aufnehmen mindestens eines Bildes von mindestens einer Reagenstestregion (120) des optischen Teststreifens (118) mit einer darauf aufgebrachten Probe von der Körperflüssigkeit unter Verwendung der Kamera (130); und
   c. Bestimmen der Analytkonzentration basierend auf einer Farbbildungsreaktion der Reagenstestregion (120) unter Berücksichtigung des Ergebnisses von Schritt a.

8. Mobile Vorrichtung (128) mit mindestens einer Kamera (130), wobei die mobile Vorrichtung (128) ferner mindestens einen Prozessor (132) aufweist, wobei die mobile Vorrichtung (128) zum Ausführen des Verfahrens zum Beurteilen der Qualität einer Farbreferenzkarte (110) nach einem der Ansprüche 1 - 6 ausgebildet ist.

9. Mobile Vorrichtung (128) nach dem vorstehenden Anspruch, wobei die mobile Vorrichtung (128) ferner zum Bestimmen der Konzentration eines Analyten in einer Körperflüssigkeit unter Verwendung mindestens eines optischen Teststreifens (118) mittels Ausführung der Schritte b. und c. des Verfahrens nach Anspruch 7 ausgebildet ist.

10. Kit (126), umfassend mindestens eine mobile Vorrichtung (128) nach Anspruch 8 oder 9, ferner umfassend mindestens eine Farbreferenzkarte (110), wobei die Farbreferenzkarte (110) eine Vielzahl von Farbreferenzfeldern (112) mit bekannten Referenzfarbwerten umfasst.

11. Kit (126) nach dem vorstehenden Anspruch, wobei der Kit (126) ferner mindestens einen optischen Teststreifen (118) mit mindestens einer Reagenstestregion (120) umfasst.

12. Computerprogramm, umfassend Anweisungen, die bei der Ausführung des Programmes von der mobilen Vorrichtung (128) nach Anspruch 8 oder 9 die mobile Vorrichtung (128) veranlassen, das Verfahren zum Beurteilen der Qualität einer Farbreferenzkarte (110) nach einem der Ansprüche 1 - 6 auszuführen.

13. Computerprogramm nach dem vorstehenden Anspruch, ferner umfassend Anweisungen, die bei der Ausführung des Programmes von der mobilen Vorrichtung (128) die mobile Vorrichtung (128) veranlassen, die Schritte b. und c. des Verfahrens nach Anspruch 7 auszuführen.

**EP 4 150 327 B1**

14. Computerlesbares Speichermedium, umfassend Anweisungen, die bei der Ausführung von der mobilen Vorrichtung (128) nach Anspruch 8 oder 9 die mobile Vorrichtung (128) veranlassen, das Verfahren zum Beurteilen der Qualität einer Farbreferenzkarte (110) nach einem der Ansprüche 1 - 6 auszuführen.

15. Computerlesbares Speichermedium nach dem vorstehenden Anspruch, ferner umfassend Anweisungen, die bei der Ausführung von der mobilen Vorrichtung (128) die mobile Vorrichtung (128) veranlassen, die Schritte b. und c. des Verfahrens nach Anspruch 7 auszuführen.

**Revendications**

1. Procédé d'évaluation de la qualité d'une carte de référence de couleurs (110), dans lequel la qualité de la carte de référence de couleurs (110) désigne un état de la carte de référence de couleurs (110) indiquant si la carte de référence de couleurs (110) est utilisable ou non dans un procédé de détermination de la concentration d'un analyte dans un fluide corporel et/ou le degré de pertinence ou le degré de fiabilité de la carte de référence de couleurs (110) pour être utilisée pour le procédé de détermination de la concentration de l'analyte dans le fluide corporel, la carte de référence de couleurs (110) comprenant une pluralité de champs de référence de couleurs (112) ayant des valeurs de couleurs de référence connues, le procédé comprenant les étapes suivantes :

   i. capture d'au moins une image d'au moins une partie de la carte de référence de couleurs (110) en utilisant au moins une caméra (130) d'au moins un dispositif mobile (128) ;
   ii. détermination de valeurs de couleurs de référence mesurées pour un ou plusieurs des champs de référence de couleurs (112) à partir de l'image ;
   iii. détermination d'une relation entre une ou plusieurs des valeurs de couleurs de référence mesurées et les valeurs de couleurs de référence connues correspondantes ; et
   iv. dérivation d'au moins un élément d'informations de qualité sur la qualité de la carte de référence de couleurs (110) en utilisant la relation de l'étape iii.

2. Procédé selon la revendication précédente, dans lequel la détermination de la relation de l'étape iii. comprend l'ajustement des valeurs de couleurs de référence mesurées aux valeurs de couleurs de référence connues correspondantes, dans lequel la dérivation des informations de qualité dans l'étape iv. comprend la détermination d'au moins un résidu d'ajustement quantifiant la qualité de l'ajustement.

3. Procédé selon l'une quelconque des revendications précédentes, dans lequel la relation entre les valeurs de couleurs de référence mesurées et les valeurs de couleurs de référence connues comprend une matrice de transformation de couleurs.

4. Procédé selon l'une quelconque des revendications précédentes, dans lequel l'au moins un élément d'informations de qualité dans l'étape iv. est au moins partiellement dérivé en utilisant la relation déterminée dans l'étape iii. et en transformant les coordonnées de couleurs mesurées d'au moins un premier champ de référence de couleur (112) en des coordonnées de couleurs attendues d'au moins un deuxième champ de référence de couleur (112) en utilisant la relation et en comparant en outre les coordonnées de couleurs attendues du deuxième champ de référence de couleurs (112) aux coordonnées de couleurs mesurées du deuxième champ de référence de couleurs (112).

5. Procédé selon l'une quelconque des revendications précédentes, dans lequel l'au moins un élément d'informations de qualité est déterminé en omettant sélectivement des valeurs de couleurs de référence mesurées d'au moins un champ de référence de couleurs (112) sélectionné dans l'étape iii., tandis que les coordonnées de couleurs des autres champs de référence de couleurs (112) sont prises en compte dans l'étape iii.

6. Procédé selon la revendication précédente, dans lequel une pluralité d'éléments d'informations de qualité est déterminée en omettant sélectivement des valeurs de couleurs de référence mesurées d'une pluralité de champs de référence de couleurs (112) sélectionnés, respectivement, dans lequel les éléments d'informations de qualité sont comparés afin d'identifier les champs de référence de couleurs (112) ayant une faible qualité.

7. Procédé de détermination de la concentration d'un analyte dans un fluide corporel, le procédé comprenant l'utilisation d'un dispositif mobile (128) ayant au moins une caméra (130), le procédé comprenant en outre l'utilisation d'au moins une bandelette de test optique (118) et au moins une carte de référence de couleurs (110) comprenant une pluralité de champs de référence de couleurs (112) ayant des valeurs de couleurs de référence connues, dans

21

lequel le procédé comprend :

    a. l'évaluation de la qualité de la carte de référence (110) en utilisant le procédé selon l'une quelconque des revendications précédentes ;

    b. la capture d'au moins une image d'au moins une région de test de réactif (120) de la bandelette de test optique (118) sur laquelle est appliqué un échantillon du fluide corporel en utilisant la caméra (130) ; et

    c. la détermination de la concentration de l'analyte sur la base d'une réaction de formation de couleur de la région de test de réactif (120), en prenant en compte le résultat de l'étape a.

8. Dispositif mobile (128) ayant au moins une caméra (130), le dispositif mobile (128) ayant en outre au moins un processeur (132), dans lequel le dispositif mobile (128) est conçu pour réaliser le procédé d'évaluation de la qualité d'une carte de référence de couleurs (110) selon l'une quelconque des références 1 à 6.

9. Dispositif mobile (128) selon la revendication précédente, dans lequel le dispositif mobile (128) est en outre conçu pour déterminer la concentration d'un analyte dans un fluide corporel en utilisant au moins une bandelette de test optique (118), en réalisant les étapes b. et c. du procédé selon la revendication 7.

10. Kit (126), comprenant au moins un dispositif mobile (128) selon la revendication 8 ou 9, comprenant en outre au moins une carte de référence de couleurs (110), la carte de référence de couleurs (110) comprenant une pluralité de champs de référence de couleurs (112) ayant des valeurs de couleurs de référence connues.

11. Kit (126) selon la revendication précédente, le kit (126) comprenant en outre au moins une bandelette de test optique (118) ayant au moins une région de test de réactif (120).

12. Programme informatique comprenant des instructions qui, lorsque le programme est exécuté par le dispositif mobile (128) selon la revendication 8 ou 9, amènent le dispositif mobile (128) à réaliser le procédé d'évaluation de la qualité d'une carte de référence de couleurs (110) selon l'une quelconque des revendications 1 à 6.

13. Programme informatique selon la revendication précédente, comprenant en outre des instructions qui, lorsque le programme est exécuté par le dispositif mobile (128), amènent le dispositif mobile (128) à réaliser les étapes b. et c. du procédé selon la revendication 7.

14. Support de stockage lisible par ordinateur comprenant des instructions qui, lorsqu'elles sont exécutées par le dispositif mobile (128) selon la revendication 8 ou 9, amènent le dispositif mobile (128) à réaliser le procédé d'évaluation de la qualité d'une carte de référence de couleurs (110) selon l'une quelconque des revendications 1 à 6.

15. Support de stockage lisible par ordinateur selon la revendication précédente, comprenant en outre des instructions qui, lorsqu'elles sont exécutées par le dispositif mobile (128), amènent le dispositif mobile (128) à réaliser les étapes b. et c. du procédé selon la revendication 7.

Fig. 1 a

110

124                                                                124

122        112    114  112    112                    122

124

116

122            113                    122

124                                                                124

148

150

152

154

154

154

Fig. 1 b

Fig. 2

<u>134</u>

<u>136</u>

<u>138</u>

<u>140</u>

<u>142</u>

Fig. 3

<u>134</u>

<u>144</u>

<u>146</u>

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190137405 A1
- US 20120189509 A1

- WO 2019162496 A1

**Non-patent literature cited in the description**

- **J. HOENES et al.** *The Technology Behind Glucose Meters: Test Strips, Diabetes Technology & Thera-peutics,* 2008, vol. 10 (1), 10-26